Europäisches Patentamt

European Patent Office

Office européen des brevets

(11) Publication number: **0 342 041 B1**

# EUROPEAN PATENT SPECIFICATION

(45) Date of publication of patent specification: **18.08.93**   (51) Int. Cl.5: **C10M 171/00**

(21) Application number: **89304794.4**

(22) Date of filing: **11.05.89**

The file contains technical information submitted after the application was filed and not included in this specification

(54) **Electro-rheological fluid.**

(30) Priority: **12.05.88 JP 113600/88**
**12.05.88 JP 113601/88**
**12.05.88 JP 113602/88**
**28.09.88 JP 240897/88**

(43) Date of publication of application:
**15.11.89 Bulletin  89/46**

(45) Publication of the grant of the patent:
**18.08.93 Bulletin  93/33**

(84) Designated Contracting States:
**DE FR GB**

(56) References cited:
**GB-A- 1 076 754**
**US-A- 3 047 507**
**US-A- 3 367 872**
**US-A- 3 970 573**

(73) Proprietor: **TOA NENRYO KOGYO KABUSHIKI KAISHA**
**1-1 Hitotsubashi, 1-Chome Chiyoda-Ku Tokyo 100(JP)**

(72) Inventor: **Tomizawa, Hirotake TOA NENRYO KOGYO K.K.**
**COR. RES. & DEV. LAB. 3-1 Nishi-tsurugaoka 1-chome**
**Ohimachi Iruma-gun Saitama(JP)**
Inventor: **Kanbara, Makoto TOA NENRYO KOGYO K.K.**
**COR. RES. & DEV. LAB. 3-1 Nishi-tsurugaoka 1-chome**
**Ohimachi Iruma-gun Saitama(JP)**
Inventor: **Yoshimura, Narihiko TOA NENRYO KOGYO K.K.**
**COR. RES. & DEV. LAB. 3-1 Nishi-tsurugaoka 1-chome**
**Ohimachi Iruma-gun Saitama(JP)**
Inventor: **Mitsui, Junichi TOA NENRYO KOGYO K.K.**
**COR. RES. & DEV. LAB. 3-1 Nishi-tsurugaoka 1-chome**
**Ohimachi Iruma-gun Saitama(JP)**
Inventor: **Hirano, Hiroshi TOA NENRYO KOGYO K.K.**
**COR. RES. & DEV. LAB. 3-1 Nishi-tsurugaoka 1-chome**
**Ohimachi Iruma-gun Saitama(JP)**

(74) Representative: **Baverstock, Michael George Douglas et al**
**BOULT, WADE & TENNANT 27 Furnival Street London, EC4A 1PO (GB)**

Rank Xerox (UK) Business Services
(3. 10/3.6/3.3. 1)

**Description**

The present invention relates to an electro-rheological fluid, the viscosity of which can be controlled by application of an electrical field (voltage). More particularly, the present invention relates to an electro-rheological liquid in which the viscosity is changed promptly and reversibly following the application of an electrical field (voltage) over a broad temperature range of from low temperatures to high temperatures, and which is stable for a long time and has a high viscosity-increasing effect.

An electro-rheological fluid (also called "electroviscous fluid" and abbreviated to ER fluid), the viscosity of which is changed by application of an electrical field (voltage), is well known; and ER fluid was discovered at the end of the 19th century [Duff, A.W., Physical Review, Vol. 4, No. 1, 23 (1986)].

Initial investigations concerning ER fluids were directed to a system composed solely of a liquid, and the effect was unsatisfactory, but then the investigations were turned toward a fluid of the solid dispersion system and a considerable improvement was obtained. For example, Winslow proposed an ER fluid comprising paraffin and silica gel powder, in which water is incorporated to render the system slightly electroconductive [Winslow, W.H., J. of Applied Physics, Vol. 20, 1137 (1949)]. Due to this study by Winslow, the electro-viscous effect possessed by the ER fluid is called an ER effect or Winslow effect.

The mechanism of a manifestation of the viscosity-increasing effect (ER effect) has been further elucidated and, for example, Klass explains that respective particles constituting the dispersed phase of the fluid cause an induced polarization of the double layer in the electric field, and that this is the main cause of the ER effect [Klass, D.L., et al., J. of Applied Physics, Vol.38, 67 (1967)].

This will now be described with reference to the electric double layer. If the electrical field is zero ($E = 0$), the ion adsorbed on the periphery of the dispersed phase (silica gel or the like) is uniformly arranged on the outer surface of the dispersed phase, but if the electrical field (E) is a definite value, polarization occurs in the ion distribution and the respective particles impart an electrostatic action to one another in the electrical field, and thus the respective particles of the dispersed phase form a bridge (cross-linkage) and the shear-resistant force to an external stress, i.e., the ER effect, is manifested.

In the above-mentioned ER fluid of the solid particle dispersion system, various proposals have been made for improving the viscosity characteristics and stability of the ER fluid while taking the mechanism of the manifestation of the ER effect into consideration. For example, the use of a ferroelectric powder and a fine powder of silicon dioxide having a small amount of water adsorbed therein (Japanese Unexamined Patent Publication No. 53-17585), the use of a high-molecular-weight dispersant having a functional group for stabilizing a dispersion system comprising a silica gel containing 1 to 15% by weight of water as the dispersed phase and a silicone oil as the liquid phase (Japanese Unexamined Patent Publication No. 61-44998), and an addition of a water-soluble electrolyte to a cellulose crystallite aggregate as the dispersed phase (Japanese Examined Patent Publication No. 57-47234), have been proposed.

Nevertheless, despite these proposals, conventional ER fluids still have an unsatisfactory prompt and reversible change response upon application of an electrical field (voltage), reproducibility of the ER effect, degree of the viscosity-increasing effect, and maintenance of the stable ER effect for a long time.

US-A-3 047 507 proposes an electro-rheological fluid comprising a liquid oleaginous vehicle, a finely divided solid, an organic surface active dispersing agent and water as essential components.

GB-A-1 076 754 proposes an electro-rheological fluid comprising particulate silica, free water and a non-polar oleaginous vehicle as essential components.

A primary object of the present invention is to provide an electro-rheological fluid having a good responsitivity in the prompt and reversible change of the viscosity upon application of an electrical field (voltage), and an excellent reproducibility of the ER effect, in which the ER effect can be stably maintained for a long time.

In accordance with the present invention, this object is obtained by an electro-rheological fluid comprising an electrically insulating liquid as the dispersion medium, a porous solid particulate material as the dispersed phase, a dispersant and a polyhydric alcohol, said fluid being free of water, wherein the electrically insulating material is selected from the group consisting of mineral oils and synthetic lubricating oils, the porous solid particulate material is in an amount of 0.1 to 50% by weight and has a particle size of 10 nm to 200 μm, the dispersant is in an amount of 0.1 to 10% by weight and is selected from the group consisting of sulfonates, phenates, phosphonates and succinimides, and the polyhydric alcohol is in an amount of 1 to 30% by weight.

The electrically insulating liquid may be selected from a naphthene type mineral oil, a paraffin type mineral oil, a poly-α-olefin, a polyalkylene glycol, a silicone, a diester, a polyol ester, a phosphoric acid ester, a silicon compound, a halogenated aromatic liquid, a polyphenyl ether, and a synthetic hydrocarbon. Preferably, the viscosity of the electrically insulating liquid used is 5 to 300 cp as measured at 40°C.

2

The kind of porous solid particle used as the dispersed phase of the ER fluid of the present invention is not particularly critical, and any porous solid particles utilized in this field can be used.

As the porous solid particle of this type, there can be mentioned a silica gel, a hydrous resin, diatomaceous earth, alumina, silica-alumina, a zeolite, an ion exchange resin and a cellulose.

The porous solid particulate material has a particle size of 10 nm to 200 $\mu$m and is used in an amount of 0.1 to 50% by weight. If the amount of the porous solid particle is smaller than 0.1% by weight, the ER effect is low, and if the amount of the porous solid particle is larger than 50% by weight, the dispersibility is often unsatisfactory.

In the present invention, a dispersant is used for uniformalizing and stabilizing the dispersion state of the porous solid particle in the dispersion medium.

The dispersant may be selected from magnesium sulfonate, calcium sulfonate, calcium phenate, calcium phosphate, polybutenyl succinimide, sorbitol mono-oleate and sorbitol sesqui-oleate. The dispersant is used in an amount of 0.1 to 10% by weight.

The presence of at least one member selected from the group consisting of acids, bases and salts in the ER fluid of the present invention can stably improve the viscosity-increasing effect, whereby an excellent ER effect can be obtained.

As the acid, there can be used, for example, inorganic acids such as sulfuric acid, hydrochloric acid, nitric acid, perchloric acid, chromic acid, phosphoric acid and boric acid, and organic acids such as acetic acid, formic acid, propionic acid, butyric acid, isobutyric acid, valeric acid, oxalic acid and malonic acid.

As the base, there can be used, for example, hydroxides of alkali metals and alkaline earth metals, carbonates of alkali metals, and amines. Bases which are dissolved and dissociated in water, a polyhydric alcohol or a mixture thereof are preferably used.

As specific examples of the base of this type, there can be used NaOH, KOH, Ca(OH)$_2$, aniline, an alkylamine and ethanolamine.

The salt used in the present invention is a compound comprising a metal or basic group (NH$_4$$^+$ or N$_2$H$_5$$^+$) and an acid group. Salts which are dissolved and dissociated in a polyhydric alcohol are preferably used. For example, there can be mentioned salts forming a typical ion crystal, such as halides of alkali metals and alkaline earth metals, and alkali metal salts of organic acids. As specific examples of the salt of this type, LiCl, NaCl, KCl, MgCl$_2$, CaCl$_2$, BaCl$_2$, LiBr, NaBr, KBr, MgBR, LiI, NaI, KI, AgNO$_3$, Ca(NO$_3$)$_2$, NaNO$_2$, NH$_4$NO$_3$, K$_2$SO$_4$, Na$_2$SO$_4$, NaHSO$_4$, (NH$_4$)$_2$SO$_4$, Na$_2$CO$_3$, NaHCO$_3$, K$_3$PO$_4$, Na$_3$PO$_4$, and alkali metal salts of formic acid, acetic acid, oxalic acid and succinic acid.

Preferably, this member is used in an amount of 0.01 to 5% by weight, especially 0.1 to 2% by weight, based on the entire fluid. If the amount of this member is smaller than 0.01% by weight, the ER effect is unsatisfactory, and if the amount of this member exceeds 5% by weight, an electric current is likely to flow in the fluid and thus the power consumption increased.

Further, in the ER fluid of the present invention, by making a polyhydric alcohol present in the absence of water, an excellent ER effect can be manifested at high temperatures (for example, temperatures higher than 80°C). A dihydric alcohol and a trihydric alcohol are valuably used as the polyhydric alcohol in the present invention. For example, ethylene glycol, glycerol, propane diol, butane diol, hexane diol, diethylene glycol and triethylene glycol can be used. The polyhydric alcohol is used in an amount of 1 to 30% by weight, especially 2 to 15% by weight, based on the porous solid particle. If the amount of this member is smaller than 1% by weight, the ER effect is low, and if the amount of this member is larger than 30% by weight, an electric current is likely to flow in the fluid.

In the ER fluid of the present invention having the above-mentioned construction, the viscosity is changed promptly and reversibly following an application of an electrical field (voltage) over a broad temperature range of from low temperatures to high temperatures, the ER fluid of the present invention ii stable for a long time, and a high viscosity-increasing effect is attained.

The reasons why such advantages can be obtained according to the present invention have not been fully elucidated, but the following presumptions can be made.

In a conventional ER fluid consisting of a mineral oil, water and a solid particle, it has been thought that the ER effect ii based on the following facts. That is, water adsorbed on each solid particle forms a thin water film, causes an induced polarization in the electric field by the polarity, and extends in the direction of the electric field to start the formation of a bridge between the water films. Thus, a bridge is formed between the electrodes and the viscosity is increased in the direction perpendicular to the electric field, thereby manifesting the ER effect.

An acid, a base or a salt is dissociated into ions in a polyhydric alcohol in the ER fluid system of the present invention and causes the effects to increase the stability and induced polarization property of the water film.

EP 0 342 041 B1

The thickness of the water film is very important for the manifestation of the ER effect. In the ER fluid system, water alone can manifest the ER effect, but where a polyhydric alcohol, such as ethylene glycol or glycerol, exists in the system alone or in combination with water, a stable film having slight thickness variation is formed on the solid particle surface. This is because the polyhydric alcohol is a polar liquid which has a high affinity with the solid particles and is likely affected by the electric field, unlikely evaporates due to its higher molecular weight as compared with water, and further is stably adsorbed on the solid particles even at a high temperature.

It is assumed that, for the above-mentioned reasons, excellent effects will be obtained in the ER fluid of the present invention.

The present invention will now be described in detail with reference to the following examples, but the scope of the present invention is not limited by these examples.

Examples 1 through 4 and Comparative Example 1

(i) Preparation of ER Fluid

A composition comprising 6% by weight of a silica gel containing 7% by weight of water (the content of the silica gel was therefore 93% by weight) and having a diameter of 1 $\mu$m and 4% by weight of a dispersant (succinimide), with the balance being a mineral oil, was thoroughly stirred and mixed to prepare an ER fluid [designated as "fluid (A)" hereinafter].

Various ER fluids were prepared by adding an acid shown in Table 1 to the fluid (A) as the base or without an addition of an acid.

Table 1

|  | Acid |
| --- | --- |
| Example 1 | 98.5/1.5 weight ratio mixture of fluid (A)/acetic acid |
| Example 2 | 98.5/1.5 weight ratio mixture of fluid (A)/sulfuric acid |
| Example 3 | 98.5/1.5 weight ratio mixture of fluid (A)/hydrochloric acid |
| Example 4 | 98.5/1.5 weight ratio mixture of fluid (A)/nitric acid |
| Comparative Example 1 | fluid (A) alone |
| Note<br>In each sample, the viscosity of the mineral acid was adjusted so that the viscosity of the fluid was 80 cp (40°C). | |

(ii) Experimental Conditions and Items of Evaluation of ER Fluids

The ER fluids were maintained at 40°C, and the ER fluids were evaluated with respect to the following items, by using a rotational viscometer where an application of a voltage was possible.

(a) Responsivity

The responsivity was evaluated based on the time (seconds) required for stabilization of the viscosity when the electrical field was changed from zero to $1.4 \times 10^6$ (V/m).

(b) Reproducibility

The cycle of the change of the electrical field of $0 \rightarrow 1.4 \times 10^6$ (V/m) $\rightarrow 0$ was repeated, and the reproducibility was evaluated based on the ratio (%) of the change of the viscosity at the electrical field of $1.4 \times 10^6$ (V/m).

(c) Stability

An electrical field of $1.4 \times 10^6$ (V/m) was constantly applied, and the ratio (%) of the change of the viscosity with a lapse of time was measured, to evaluate the stability (the measurement time was 1 hour).

4

(d) Viscosity-Increasing Effect

The viscosity-increasing effect was evaluated based on the ratio (times) of the viscosity at an electrical field of $1.4 \times 10^6$ (V/m) to the viscosity at an electrical field of 0 (V/m).

(iii) The results are shown in Table 2.

Table 2

|  | Responsivity (seconds) | Reproducibility (%) | Stability (%) | Viscosity-Increasing Effect (times) |
|---|---|---|---|---|
| Example 1 | less than 1 | ±2 | ±2 | 3.5 |
| Example 2 | less than 1 | ±3 | ±2 | 3.0 |
| Example 3 | less than 1 | ±4 | ±3 | 2.9 |
| Example 4 | less than 1 | ±4 | ±3 | 2.7 |
| Comparative Example 1 | 10 - 240 | -20 - +30 | ±20 | 2.0 |

Examples 5 through 8 and Comparative Examples 2 and 3

(i) Preparation of ER Fluids

(a) A silica gel containing 7% by weight of ethylene glycol (the content of the silica gel was therefore 93% by weight) and having a diameter of about 1 $\mu$m, a dispersant (succinimide) and a mineral oil were mixed at a weight ratio of 6/4/90 to obtain a fluid (B).
(b) A silica gel containing 7% by weight of water (the content of the silica gel was therefore 93% by weight) and having a diameter of about 1 $\mu$m, a dispersant (succinimide) and a mineral oil were mixed at a weight ratio of 6/4/90 to obtain a fluid (c).
Various ER fluids shown in Table 3 were prepared by using the above-mentioned fluids (B) and (C).

Table 3

|  | Acid |
|---|---|
| Example 5 | 98.5/1.5 weight ratio mixture of fluid (B)/acetic acid |
| Example 6 | 98.5/1.5 weight ratio mixture of fluid (B)/sulfuric acid |
| Example 7 | 98.5/1.5 weight ratio mixture of fluid (B)/hydrochloric acid |
| Example 8 | 98.5/1.5 weight ratio mixture of fluid (B) nitric acid |
| Comparative Example 2 | fluid (B) alone |
| Comparative Example 3 | fluid (C) alone |

Note In each sample, the viscosity of the mineral oil was adjusted so that the viscosity of the fluid was 80 cp at 40°C.

(ii) Experimental Conditions and Items of Evaluation of ER Fluids

The ER fluids were evaluated at 40°C and 90°C in the same manner as described in Example 1.

(iii) Results

The results are shown in Table 4.

## Table 4

| | Temperature | Responsitivity (seconds) | Reproducibility (%) | Stability (%) | Viscosity-Increasing Effect (times) |
|---|---|---|---|---|---|
| Example No. 5 | 40°C | less than 1 | ±2 | ±2 | 4.0 |
| | 90°C | less than 1 | ±2 | ±2 | 3.8 |
| 6 | 40°C | less than 1 | ±2 | ±2 | 3.8 |
| | 90°C | less than 1 | ±2 | ±3 | 3.7 |
| 7 | 40°C | less than 1 | ±2 | ±2 | 3.6 |
| | 90°C | less than 1 | ±2 | ±2 | 3.2 |
| 8 | 40°C | less than 1 | ±2 | ±2 | 3.4 |
| | 90°C | less than 1 | ±3 | ±3 | 3.1 |
| Comparative 2 Example No. | 40°C | 5 | ±5 | ±4 | 2.2 |
| | 90°C | 5 | ±5 | ±4 | 2.1 |
| 3 | 40°C | 10 – 240 | -20 – +30 | ±20 | 2.0 |
| | 90°C | 20 – 200 | ±20 | ±10 | 1.0 – 1.2 |

Examples 9 through 12 and Comparative Examples 4 and 5

(i) Preparation of ER Fluids

Various ER fluids were prepared from compositions shown in Table 5.

Note, in each sample the viscosity of the mineral oil was adjusted so that the viscosity of the ER fluid was 80 cp at 40°C. The silica gel had a diameter of about 1 $\mu$m.

**Table 5**

| Composition (% by weight) | | Example No. | | | | Comparative Example No. | |
|---|---|---|---|---|---|---|---|
| | | 9 | 10 | 11 | 12 | 4 | 5 |
| dispersion medium | mineral oil | 89.2 | 89.5 | 89.5 | 89.4 | 89.6 | 89.6 |
| porous solid | silica gel | 6.0 | 6.0 | 6.0 | 6.0 | 6.0 | 6.0 |
| water | | – | – | – | 0.2 | – | 0.4 |
| polyhydric alcohol | ethylene glycol | 0.4 | 0.4 | 0.4 | 0.2 | 0.4 | – |
| salt or base | NaI | 0.4 | – | – | – | – | – |
| | NaNO$_2$ | – | 0.1 | – | – | – | – |
| | LiBr | – | – | 0.1 | – | – | – |
| | NaOH | – | – | – | 0.2 | – | – |
| dispersant | succinic-acid imide | 4.0 | 4.0 | 4.0 | 4.0 | 4.0 | 4.0 |

(ii) Experimental Conditions and Items of Evaluation of ER Fluids.

The ER fluids were evaluated at 40°C and 90°C in the same manner as described in Example 1.

(iii) Results

The results are shown in Table 6.

**Table 6**

| Example No. | Temperature | Responsivity (seconds) | Reproducibility (%) | Stability (%) | Viscosity-Increasing Effect (times) |
|---|---|---|---|---|---|
| 9 | 40°C | less than 1 | ±2 | ±2 | 3.4 |
|  | 90°C | less than 1 | ±2 | ±2 | 3.7 |
| 10 | 40°C | less than 1 | ±2 | ±2 | 4.0 |
|  | 90°C | less than 1 | ±2 | ±3 | 4.3 |
| 11 | 40°C | less than 1 | ±2 | ±2 | 3.0 |
|  | 90°C | less than 1 | ±2 | ±3 | 3.2 |
| 12 | 40°C | less than 1 | ±2 | ±2 | 2.9 |
|  | 90°C | less than 1 | ±2 | ±2 | 2.7 |
| Comparative Example No. 4 | 40°C | 5 | ±5 | ±4 | 2.2 |
|  | 90°C | 5 | ±5 | ±4 | 2.1 |
| 5 | 40°C | 10 - 240 | -20 - +30 | ±20 | 2.0 |
|  | 90°C | 20 - 200 | ±20 | ±10 | 1.0 - 1.2 |

**Claims**

1. An electro-rheological fluid comprising an electrically insulating liquid as the dispersion medium, a porous solid particulate material as the dispersed phase, a dispersant and a polyhydric alcohol, said fluid being free of water, wherein the electrically insulating material is selected from the group

8

consisting of mineral oils and synthetic lubricating oils, the porous solid particulate material is in an amount of 0.1 to 50% by weight and has a particle size of 10 nm to 200 $\mu$m, the dispersant is in an amount of 0.1 to 10% by weight and is selected from the group consisting of sulfonates, phenates, phosphonates and succinimides, and the polyhydric alcohol is in an amount of 1 to 30% by weight.

2. An electro-rheological fluid as claimed in claim 1, wherein the electrically insulating liquid is selected from naphthene type mineral oils, paraffin type mineral oils, poly-$\alpha$-olefins, polyalkylene glycols, silicones, diesters, polyol esters, phosphoric acid esters, silicon compounds, fluorine compounds, halogenated aromatic liquids, polyphenyl ethers and synthetic hydrocarbons.

3. An electro-rheological fluid as claimed in claim 1 or claim 2, wherein the electrically insulating liquid has a viscosity of 5 to 300 cp at 40°C.

4. An electro-rheological fluid as claimed in any one of the preceding claims, wherein the porous solid particulate material is selected from silica gels, hydrous resins, diatomaceous earth, alumina, silica-alumina, zeolites, ion exchange resins and celluloses.

5. An electro-rheological fluid as claimed in any one of the preceding claims, wherein the dispersant is selected from magnesium sulfonate, calcium sulfonate, calcium phenate, calcium phosphonate and polybutenyl succinimide.

6. An electro-rheological fluid as claimed in any one of the preceding claims which further comprises at least one member selected from acids, bases and salts.

7. An electro-rheological fluid as claimed in claim 6, wherein the acid is selected from sulfuric acid, hydrochloric acid, nitric acid, perchloric acid, chromic acid, phosphoric acid, acetic acid, formic acid, propionic acid, butyric acid, isobutyric acid, valeric acid, oxalic acid and malonic acid.

8. An electro-rheological fluid as claimed in claim 6, wherein the base is selected from NaOH, KOH, Ca-$(OH)_2$, aniline, alkylamines and ethanolamine.

9. An electro-rheological fluid as claimed in claim 6, wherein the salt is selected from LiCl, NaCl, KCl, $MgCl_2$, $CaCl_2$, $BaCl_2$, LiBr, NaBr, KBr, MgBr, LiI, NaI, KI, $AgNO_3$, $Ca(NO_3)_2$, $NaNO_2$, $NH_4NO_3$, $K_2SO_4$, $Na_2SO_4$, $NaHSO_4$, $(NH_4)_2SO_4$, $Na_2CO_3$, $NaHCO_3$, $K_3PO_4$, $Na_3PO_4$ and alkali metal salts of formic acid, acetic acid, oxalic acid and succinic acid.

10. An electro-rheological fluid as claimed in any one of claims 6 to 9, wherein at least one member selected from the acids, bases and salts is contained in an amount of 0.01 to 5% by weight based on the entire fluid.

11. An electro-rheological fluid as claimed in any one of the preceding claims, wherein the polyhydric alcohol is selected from dihydric alcohols and trihydric alcohols.

12. An electro-rheological fluid as claimed in claim 11 wherein the polyhydric alcohol is selected from ethylene glycol, glycerol, propane diol, butane diol, hexane diol, diethylene glycol and triethylene glycol.

**Patentansprüche**

1. Eine elektrorheologische Flüssigkeit, umfassend eine elektrisch isolierende Flüssigkeit als das Dispersionsmedium, ein poröses festes teilchenförmiges Material als die dispergierte Phase, ein Dispersant und einen Polyhydroxyalkohol, wobei die Flüssigkeit frei von Wasser ist, wobei das elektrisch isolierende Material ausgewählt wird aus der Gruppe bestehend aus Mineralölen und synthetischen Schmierölen, wobei das poröse feste teilchenförmige Material in einer Menge von 0,1 bis 50 Gew.-% vorliegt und eine Partikelgröße von 10 nm bis 200 $\mu$m aufweist, das Dispersant in einer Menge von 0,1 bis 10 Gew.-% vorliegt und ausgewählt wird aus der Gruppe bestehend aus: Sulfonaten, Phenaten, Phosphonaten und Succinimiden, und der Polyhydroxyalkohol in einer Menge von 1 bis 30 Gew.-% vorliegt.

**2.** Eine elektrorheologische Flüssigkeit wie in Anspruch 1 beansprucht, worin die elektrisch isolierende Flüssigkeit ausgewählt wird aus:
Mineralölen vom Naphthentyp, Mineralölen vom Paraffintyp, Poly-α-Olefinen, Polyalkylenglykolen, Silikonen, Diestern, Polyolestern, Phosphorsäureestern, Siliziumverbindungen, Fluorverbindungen, halogenierten aromatischen Flüssigkeiten, Polyphenylethern und synthetischen Kohlenwasserstoffen.

**3.** Eine elektrorheologische Flüssigkeit wie in Anspruch 1 oder 2 beansprucht, worin die elektrisch isolierende Flüssigkeit eine Viskosität von 5 bis 300 cp bei 40°C aufweist.

**4.** Eine elektrorheologische Flüssigkeit wie in einem der vorhergehenden Ansprüche beansprucht, worin das poröse feste teilchenförmige Material ausgewählt wird aus:
Silicagelen, wäßrigen Harzen, Diatomeenerde, Aluminiumoxid, Siliziumdioxid-Aluminiumoxid, Zeolithen, Ionenaustauschharzen und Zellulosen.

**5.** Eine elektrorheologische Flüssigkeit wie in einem der vorhergehenden Ansprüche beansprucht, worin das Dispersant ausgewählt wird aus:
Magnesiumsulfonat, Calciumsulfonat, Calciumphenat, Calciumphosphonat und Polybutenylsuccinimid.

**6.** Eine elektrorheologische Flüssigkeit wie in irgendeinem der vorhergehenden Ansprüche beansprucht, welches weiter wenigstens einen Teil, ausgewählt aus Säuren, Basen und Salzen, aufweist.

**7.** Eine elektrorheologische Flüssigkeit wie in Anspruch 6 beansprucht, worin die Säure ausgewählt wird aus:
Schwefelsäure, Salzsäure, Salpetersäure, Perchlorsäure, Chromsäure, Phosphorsäure, Essigsäure, Ameisensäure, Propionsäure, Buttersäure, Isobuttersäure, Valeriansäure, Oxalsäure und Malonsäure.

**8.** Eine elektrorheologische Flüssigkeit wie in Anspruch 6 beansprucht, worin die Base ausgewählt wird aus:
NaOH, KOH, $Ca(OH)_2$, Anilin, Alkylaminen und Ethanolamin.

**9.** Eine elektrorheologische Flüssigkeit wie in Anspruch 6 beansprucht, worin das Salz ausgewählt wird aus:
LiCl, NaCl, KCl, $MgCl_2$, $CaCl_2$, $BaCl_2$, LiBr, NaBr, KBr, MgBr, LiI, NaI, KI, $AgNO_3$, $Ca(NO_3)_2$, $NaNO_2$, $NH_4NO_3$, $K_2SO_4$, $Na_2SO_4$, $NaHSO_4$, $(NH_4)_2SO_4$, $Na_2CO_3$, $NaHCO_3$, $K_3PO_4$, $Na_3PO_4$ und Alkalimetallsalzen der Ameisensäure, Essigsäure, Oxalsäure und Bernsteinsäure.

**10.** Eine elektrorheologische Flüssigkeit wie in irgendeinem der Ansprüche 6 bis 9 beansprucht, worin wenigstens ein Teil, ausgewählt aus den Säuren, Basen und Salzen, in einer Menge von 0,01 bis 5 Gew.-%, basierend auf der gesamten Flüssigkeit, enthalten ist.

**11.** Eine elektrorheologische Flüssigkeit wie in irgendeinem der vorhergehenden Ansprüche beansprucht, worin der Polyhydroxyalkohol ausgewählt wird aus:
Dihydroxyalkoholen und Trihydroxyalkoholen.

**12.** Eine elektrorheologische Flüssigkeit wie in Anspruch 11 beansprucht, worin der Polyhydroxyalkohol ausgewählt wird aus:
Ethylenglykol, Glycerin, Propandiol, Butandiol, Hexandiol, Diethylenglykol und Triethylenglykol.

**Revendications**

**1.** Un fluide électrorhéologique comprenant un liquide électriquement isolant comme fluide de dispersion, un matériau particulaire solide poreux comme phase dispersée, un agent dispersant et un polyalcool, ledit fluide étant exempt d'eau, dans lequel le matériau électriquement isolant est choisi parmi le groupe composé d'huiles minérales et d'huiles de lubrification synthétiques, le matériau particulaire solide poreux est présent en une quantité de 0,1 à 50% en poids et a une grosseur de particules de 10 nm à 200 µm, le dispersant est présent en une quantité de 0,1 à 10% en poids et est choisi parmi le groupe composé de sulfonates, phénates, phosphonates et succinimides et le polyalcool est présent en une quantité de 1 à 30% en poids.

2. Un fluide électrorhéologique suivant la revendication 1, dans lequel le liquide électriquement isolant est choisi parmi le groupe composé des huiles minérales du type naphtène, les huiles minérales du type paraffine, poly-$\alpha$-oléfines, polyalkylèneglycols, silicones, diesters, esters de polyol, esters de l'acide phosphorique, composés de silicium, composés de fluor, liquides aromatiques halogénés, éthers polyphényliques et hydrocarbures synthétiques.

3. Un fluide électrorhéologique suivant la revendication 1 ou la revendication 2, dans lequel le liquide électriquement isolant présente une viscosité de 5 à 300 cp à 40°C.

4. Un fluide électrorhéologique suivant l'une ou l'autre des revendications précédentes, dans lequel le matériau particulaire solide poreux est choisi parmi les silicagels, résines hydratées, terre de diatomée, alumine, silico-alumine, zéolites, résines échangeuses d'ions et celluloses.

5. Un fluide électrorhéologique suivant l'une ou l'autre des revendications précédentes, dans lequel le dispersant est choisi parmi le sulfonate de magnésium, sulfonate de calcium, phénate de calcium, phosphonate de calcium et succinimide polybuténylique.

6. Un fluide électrorhéologique suivant l'une ou l'autre des revendications précédentes, qui comprend, en outre, au moins un élément choisi parmi les acides, bases et sels.

7. Un fluide électrorhéologique suivant la revendication 6, dans lequel l'acide est choisi parmi l'acide sulfurique, acide chlorhydrique, acide nitrique, acide perchlorique, acide chromique, acide phosphorique, acide acétique, acide formique, acide propionique, acide butyrique, acide isobutyrique, acide valérique, acide oxalique et acide malonique.

8. Un fluide électrorhéologique suivant la revendication 6, dans lequel la base est choisie parmi NaOH, KOH, $Ca(OH)_2$, aniline, les alkylamines et l'éthanolamine.

9. Un fluide électrorhéologique suivant la revendication 6, dans lequel le sel est choisi parmi LiCl, NaCl, KCl, $MgCl_2$, $CaCl_2$, $BaCl_2$, LiBr, NaBr, KBr, MgBr, LiI, NaI, KI, $AgNO_3$, $Ca(NO_3)_2$, $NaNO_2$, $NH_4NO_3$, $K_2SO_4$, $Na_2SO_4$, $NaHSO_4$, $(NH_4)_2SO_4$, $Na_2CO_3$, $NaHCO_3$, $K_3PO_4$, $Na_3PO_4$, et les sels de métaux alcalins de l'acide formique, acide acétique, acide oxalique et acide succinique.

10. Un fluide électrorhéologique suivant l'une ou l'autre des revendications 6 à 9, dans lequel au moins un élément choisi parmi les acides, bases et sels est contenu en une quantité de 0,01 à 5% en poids sur base de l'ensemble du fluide.

11. Un fluide électrorhéologique suivant l'une ou l'autre des revendications précédentes, dans lequel le polyalcool est choisi parmi les dialcools et trialcools.

12. Un fluide électrorhéologique suivant la revendication 11, dans lequel le polyalcool est choisi parmi l'éthylèneglycol, glycérol, propane-diol, butane-diol, hexane-diol, diéthylène-glycol et triéthylène-glycol.